# EUROPEAN PATENT APPLICATION

(11) **EP 2 626 652 A1**
(43) Date of publication of application: **14.08.2013**
(21) Application number: 13154211.0
(22) Date of filing: 06.02.2013
(51) Int. Cl.: F25B 13/00, F25B 41/04, F25B 49/02, F25B 31/00

(54) **Air-conditioning system and four-way valve control method for air-conditioning system**

(30) Priority: 13.02.2012 JP 2012028616
(71) Applicant: MITSUBISHI HEAVY INDUSTRIES, LTD., Tokyo 108-8215 (JP)
(72) Inventor: Kato, Takahiro, TOKYO, 108-8215 (JP)
(74) Representative: Intès, Didier Gérard André

(57) **Abstract**

The present invention provides an air-conditioning system and a four-way valve control method for the air-conditioning system which can ensure switching of a four-way valve. A four-way valve control method for an air-conditioning system equipped with a refrigerant circuit which includes a compressor adapted to compress and discharge a refrigerant and a four-way valve driven by pilot pressure and adapted to switch a flow path for the refrigerant discharged from the compressor includes the steps of: adjusting rotational speed of the compressor (S2); closing off an on-off valve (S3) installed on a bypass route in the refrigerant circuit only for a fixed period of time when the rotational speed of the compressor reaches a predetermined first rotational speed or when the rotational speed of the compressor is being increased; and causing the four-way valve to perform a switching operation (S4) after the on-off valve is closed off for the fixed period of time.

## Description

### {Technical Field}

The present invention relates to an air-conditioning system and a four-way valve control method for the air-conditioning system.

### {Background Art}

In order for an air-conditioning system to switch a flow of refrigerant in a refrigerant circuit between cooling operation and heating operation, a selector valve such as a four-way valve is installed in the refrigerant circuit. The four-way valve is switched to switch between cooling operation and heating operation, or between heating operation and defrosting operation.
Japanese Unexamined Patent Application, Publication No. 2009-79828 (PTL 1) discloses a technique for reliably switching a plurality of four-way valves in a configuration of an invention related to a heat pump type air-conditioner equipped with a plurality of outdoor units in which the four-way valves are installed side by side.

### {Citation List}

### {Patent Literature}

{PTL 1}
Japanese Unexamined Patent Application, Publication No. 2009-79828

### {Summary of Invention}

### {Technical Problem}

When a four-way valve is driven and switched by pilot pressure, it is necessary to secure differential pressure between a high-pressure side and a low-pressure side of a refrigerant circuit. If the differential pressure is not secured and the four-way valve does not operate reliably due to, for example, a cryogenic temperature, the four-way valve may not switch even if discharge pressure of a compressor increases subsequently. If operation is continued when the four-way valve does not switch, there is danger that the operation might cause liquid floodback. In order to switch the four-way valve reliably, it is conceivable to use an optional component adapted to assist mechanical operation of the four-way valve, but this will increase manufacturing cost.

The present invention has been made in view of the above circumstances and has an object to provide an air-conditioning system and a four-way valve control method for the air-conditioning system which can ensure switching of a four-way valve.

### {Solution to Problem}

An air-conditioning system according to a first aspect of the present invention comprises: a refrigerant circuit which includes a compressor adapted to compress and discharge a refrigerant and a four-way valve driven by pilot pressure and adapted to switch a flow path for the refrigerant discharged from the compressor; a compressor control unit adapted to adjust rotational speed of the compressor; an on-off valve control unit adapted to close off an on-off valve installed on a bypass route in the refrigerant circuit only for a fixed period of time when the rotational speed of the compressor reaches a predetermined first rotational speed or when the rotational speed of the compressor is being increased; and a four-way valve control unit adapted to cause the four-way valve to perform a switching operation after the on-off valve is closed off for the fixed period of time.

With this configuration, the on-off valve installed on the bypass route in the refrigerant circuit is closed off when the rotational speed of the compressor reaches the predetermined first rotational speed or when the rotational speed of the compressor is being increased. Consequently, the differential pressure of the refrigerant circuit is adjusted, increasing the possibility that the differential pressure needed to switch the four-way valve will be secured. Therefore, by performing a switching operation with the on-off valve closed off, it is possible to ensure switching of the four-way valve. Also, since the valve is closed off only for a fixed period of time, possible adverse effects on the refrigerant circuit can be reduced.

The first aspect of the present invention may further comprise: a high pressure measuring unit adapted to measure a first pressure of the refrigerant on a discharge side of the compressor, which coincides with an inlet side of the four-way valve; a low pressure measuring unit adapted to measure a second pressure of the refrigerant on a suction side of the compressor, which coincides with an outlet side of the four-way valve; and a differential pressure calculating unit adapted to calculate a differential pressure between the first pressure and the second pressure, wherein the on-off valve control unit may close off the on-off valve only for a fixed period of time when the calculated differential pressure is lower than a predetermined first threshold.

With this configuration, the differential pressure between the first pressure and second pressure is calculated across the four-way valve, where the first pressure involves a high refrigerant pressure while the second pressure involves a low refrigerant pressure. When the differential pressure is lower than the first threshold, the on-off valve is closed off to adjust the differential pressure of the refrigerant circuit. That is, when the differential pressure needed to switch the four-way valve is not secured, the on-off valve is closed off to ensure switching of the four-way valve.

In the first aspect of the present invention, the four-way valve control unit may cause the four-way valve to perform a switching operation if the differential pressure becomes equal to or higher than the first threshold while the on-off valve remains closed off.

With this configuration, since the four-way valve is caused to perform the switching operation when the differential pressure becomes equal to or higher than the first threshold, it becomes highly likely that the differential pressure needed to switch the four-way valve will be secured for the four-way valve. This ensures switching of the four-way valve.

The first aspect of the present invention may further comprise a determination unit adapted to determine that a switching operation of the four-way valve has been performed successfully if the differential pressure calculated upon elapse of a predetermined period of time after the four-way valve performs the switching operation is equal to or higher than the first threshold.

With this configuration, it is determined that the differential pressure needed to switch the four-way valve has been secured reliably and that a switching operation of the four-way valve has been performed successfully if the differential pressure is equal to or higher than the first threshold upon elapse of a predetermined period of time after the four-way valve performs the switching operation.

In the first aspect of the present invention, if the differential pressure calculated upon elapse of a predetermined period of time after the four-way valve performs a switching operation is lower than the first threshold, the compressor control unit may stop the compressor and then restart the compressor; and the four-way valve control unit may cause the four-way valve to perform a switching operation again after the restart.

With this configuration, if the differential pressure is lower than the first threshold upon elapse of a predetermined period of time after the four-way valve performs the switching operation, it is likely that there is something wrong with the switching operation of the four-way valve, but the differential pressure of the refrigerant circuit is readjusted when the compressor is stopped and then restarted. Then, the four-way valve performs the switching operation again under conditions in which it is highly likely that the differential pressure is secured. This ensures switching of the four-way valve.

A four-way valve control method for an air-conditioning system according to a second aspect of the present invention is a four-way valve control method for an air-conditioning system equipped with a refrigerant circuit which includes a compressor adapted to compress and discharge a refrigerant and a four-way valve driven by pilot pressure and adapted to switch a flow path for the refrigerant discharged from the compressor, the four-way valve control method comprising the steps of: adjusting rotational speed of the compressor; closing off an on-off valve installed on a bypass route in the refrigerant circuit only for a fixed period of time when the rotational speed of the compressor reaches a predetermined first rotational speed or when the rotational speed of the compressor is being increased; and causing the four-way valve to perform a switching operation after the on-off valve is closed off for the fixed period of time.

### {Advantageous Effects of Invention}

The present invention makes it possible, in the refrigerant circuit of an air-conditioning system, to adjust differential pressure, secure the differential pressure needed to switch a four-way valve, and thereby ensures switching of the four-way valve.

### {Brief Description of Drawings}

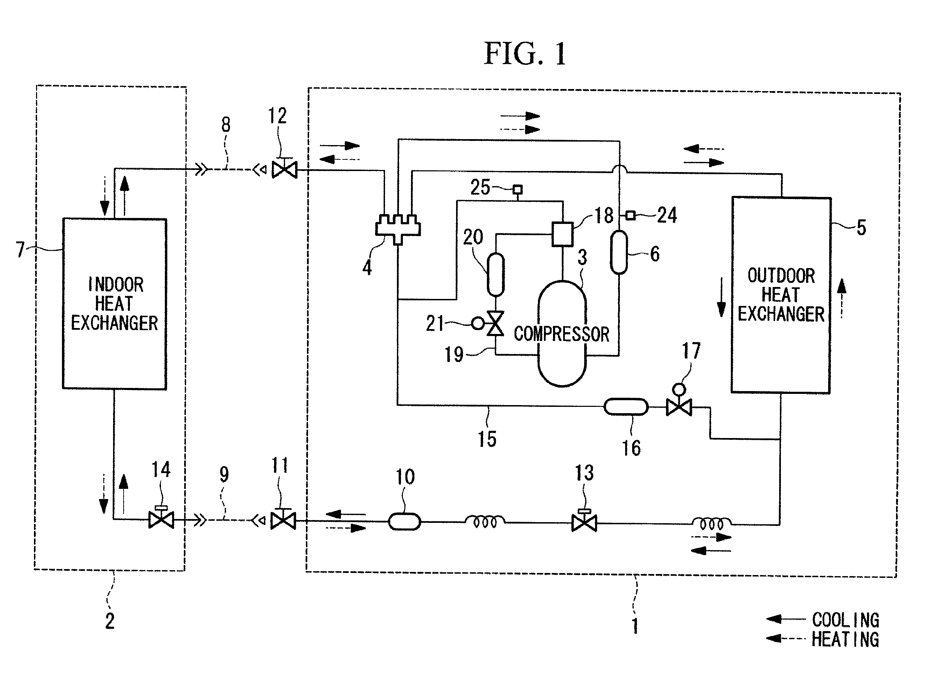

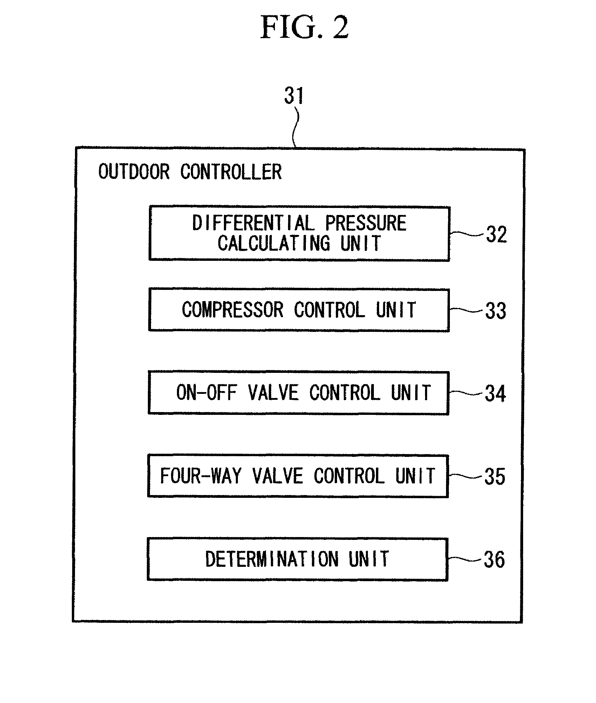

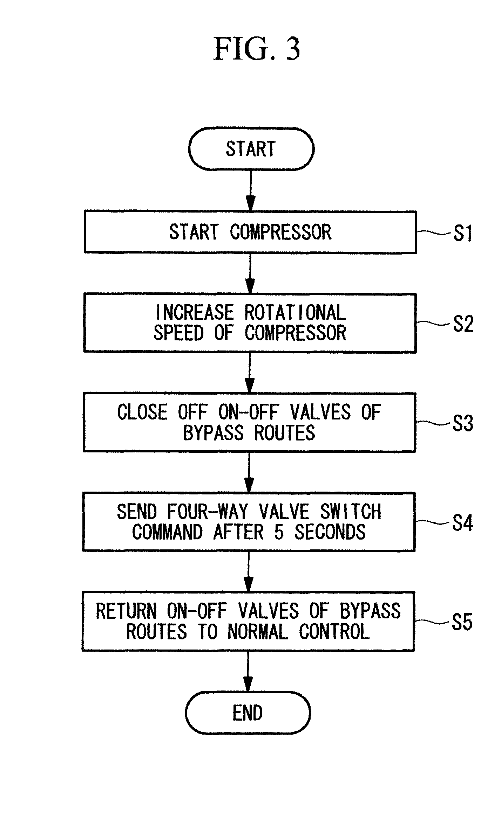

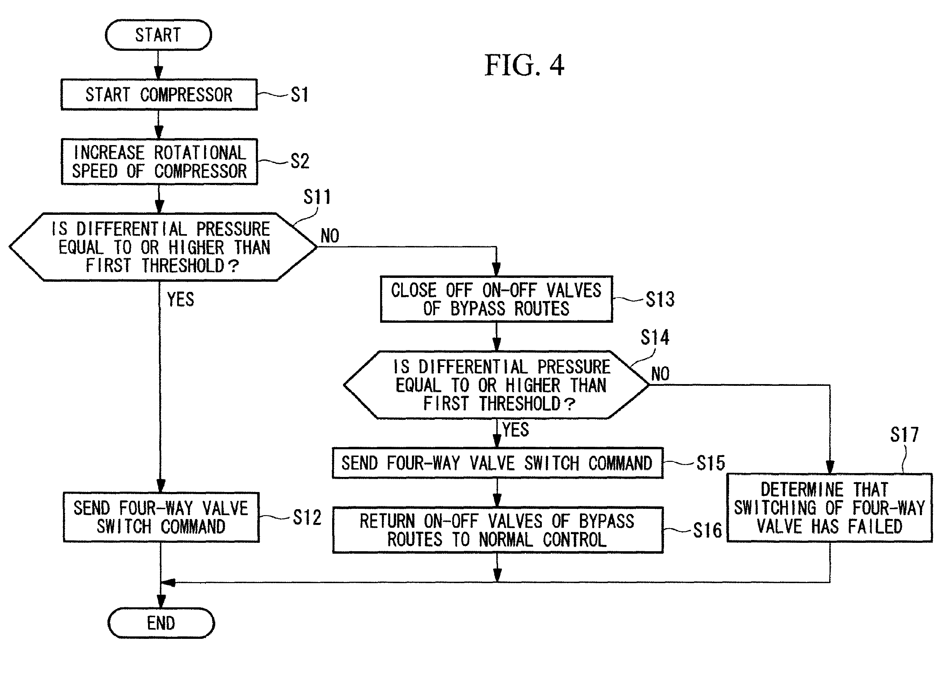

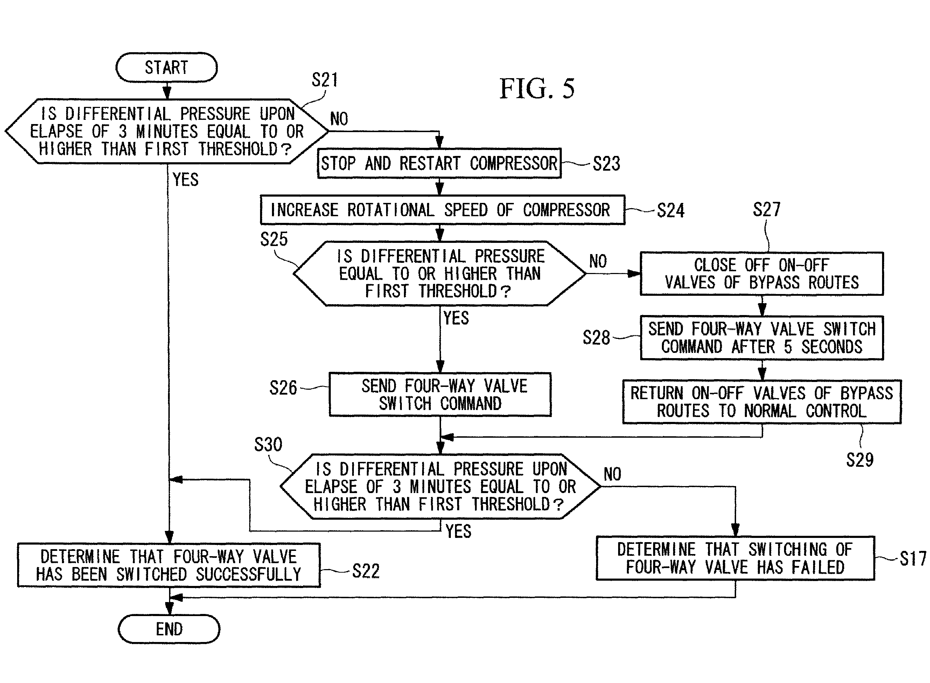

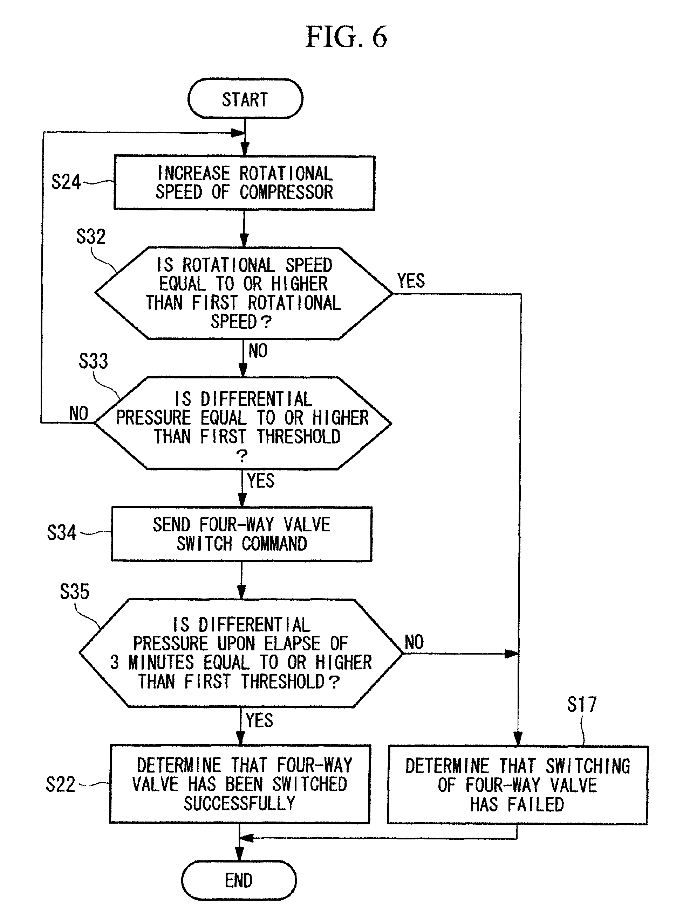

{Fig. 1} Fig. 1 is a configuration diagram showing an air-conditioning system according to an embodiment of the present invention;
{Fig. 2} Fig. 2 is a block diagram showing an outdoor controller of the air-conditioning system according to an embodiment of the present invention;
{Fig. 3} Fig. 3 is a flowchart showing operation of the air-conditioning system according to an embodiment of the present invention;
{Fig. 4} Fig. 4 is a flowchart showing operation of the air-conditioning system according to an embodiment of the present invention;
{Fig. 5} Fig. 5 is a flowchart showing operation of the air-conditioning system according to an embodiment of the present invention; and
{Fig. 6} Fig. 6 is a flowchart showing operation of the air-conditioning system according to an embodiment of the present invention.

### {Description of Embodiment}

An air-conditioning system according to an embodiment of the present invention will be described below with reference to Fig. 1. Fig. 1 is a configuration diagram showing the air-conditioning system according to this embodiment of the present invention.
The air-conditioning system is made up of an outdoor unit 1 and an indoor unit 2 and includes a refrigerant circuit made up of a refrigerant pipe.
The outdoor unit 1 includes a compressor 3, a four-way valve 4, an outdoor heat exchanger 5, an accumulator 6, a heating expansion valve 13, and an outdoor controller 31 (see Fig. 2) as major components, where the outdoor controller 31 is adapted to control various parts of the outdoor unit 1. On the other hand, the indoor unit 2 includes an indoor heat exchanger 7, a cooling expansion valve 14, and an indoor controller (not shown). Also, the outdoor heat exchanger 5 of the outdoor unit 1 and indoor heat exchanger 7 of the indoor unit 2 are connected with each other via a gas pipe 8 and liquid pipe 9.

In the outdoor unit 1, the compressor 3 is connected on a discharge side with the four-way valve 4 inserted in a midsection of the gas pipe 8, and is connected on a suction side with the four-way valve 4 via the accumulator 6. The compressor 3 here is an inverter-driven, variable-capacity compressor.

The four-way valve 4 is driven by pilot pressure and adapted to switch a flow path for the refrigerant discharged from the compressor 3. When the four-way valve 4 is off, cooling operation or defrosting operation is activated, and the compressor 3, outdoor heat exchanger 5, indoor heat exchanger 7, and accumulator 6 are coupled in sequence. On the other hand, when the four-way valve 4 is on, heating operation is activated, and the compressor 3, indoor heat exchanger 7, outdoor heat exchanger 5, and accumulator 6 are coupled in sequence.

That is, during cooling operation of the air-conditioning system, high-temperature, high-pressure gaseous refrigerant discharged from the compressor 3 of the outdoor unit 1 is sent to the outdoor heat exchanger 5 via a check valve (not shown) and the four-way valve 4 and is condensed and liquefied in the outdoor heat exchanger 5 by exchanging heat with outside air. The liquid refrigerant passes through a strainer 10 and a liquid-side operating valve 11 in sequence and flows into the indoor unit 2. Then, the liquid refrigerant is thermally expanded while passing through the cooling expansion valve 14, sent to indoor heat exchanger 7, and evaporated there by cooling indoor air. The refrigerant gasified by absorbing heat in the indoor heat exchanger 7 flows into the gas pipe 8, passes through a gas-side operating valve 12, flows into the outdoor unit 1, passes through the four-way valve 4 and accumulator 6, and is sent to the compressor 3.

In cooling operation, the outdoor heat exchanger 5 is an example of a condenser while the indoor heat exchanger 7 is an example of an evaporator. The compressor 3, outdoor heat exchanger 5, cooling expansion valve 14, and indoor heat exchanger 7 make up the refrigerant circuit.

During heating operation, the four-way valve 4 is switch to a direction different from the direction for cooling operation. The refrigerant discharged from the compressor 3 of the outdoor unit 1 passes through a check valve (not shown), the four-way valve 4, the gas-side operating valve 12, and the gas pipe 8, and flows into the indoor heat exchanger 7 of the indoor unit 2 as indicated by a broken line arrow. Then, the refrigerant releases heat in the indoor heat exchanger 7, and thereby condenses and liquefies. The liquid refrigerant passes through the liquid pipe 9 and liquid-side operating valve 11 and flows into the outdoor unit 1. Then, the liquid refrigerant passes through the strainer 10, adiabatically expands when passing through the heating expansion valve 13, and is sent to the outdoor heat exchanger 5, in which the refrigerant absorbs heat from outside air and thereby evaporates. Then, the gaseous refrigerant is sent to the compressor 3 by passing through the four-way valve 4 and accumulator 6.

In heating operation, the indoor heat exchanger 7 is an example of a condenser while the outdoor heat exchanger 5 is an example of an evaporator. The compressor 3, indoor heat exchanger 7, heating expansion valve 13, and outdoor heat exchanger 5 make up the refrigerant circuit.

A low-pressure sensor 24 is installed on a pipe connected to an inlet of the accumulator 6. The low-pressure sensor 24 measures pressure of the low-pressure gaseous refrigerant sucked into the compressor 3.

A high-pressure sensor 25 is installed on a pipe connected to a discharge port of the compressor 3. The high-pressure sensor 25 measures pressure of the high-pressure gaseous refrigerant discharged from the compressor 3.

Bypass routes such as a hot gas bypass 15 and oil return bypass 19 are further installed in the refrigerant circuit.

The hot gas bypass 15 links the discharge side of the compressor 3, which is also the inlet side of the four-way valve 4, with the outlet side of the outdoor heat exchanger 5, which is also the inlet side of the heating expansion valve 13. A strainer 16 and on-off valve 17 are installed on the hot gas bypass 15. During cooling operation, the on-off valve 17 is closed and the hot gas bypass 15 is shut off, stopping the supply of gaseous refrigerant via the hot gas bypass 15. On the other hand, during heating operation, as the on-off valve 17 is open, high-temperature gaseous refrigerant (hot gas) discharged from the compressor 3 flows through the hot gas bypass 15 and is supplied to the outdoor heat exchanger 5.

An oil separator 18 is installed on the discharge side of the compressor 3 to separate lubricant from the refrigerant. The lubricant divided by the oil separator 18 flows into the four-way valve 4. On the other hand, the lubricant is supplied to the compressor 3 via the oil return bypass 19.
The oil return bypass 19 links the oil separator 18 to the compressor 3, and a strainer 20 and on-off valve 21 are installed on the oil return bypass 19.

Next, the outdoor controller 31 will be described.
The outdoor controller 31 includes a differential pressure calculating unit 32, a compressor control unit 33, an on-off valve control unit 34, a four-way valve control unit 35, and a determination unit 36.
The differential pressure calculating unit 32 calculates a pressure difference (differential pressure) between pressures measured by the low-pressure sensor 24 and high-pressure sensor 25.
The compressor control unit 33 adjusts rotational speed of the compressor 3. Also, the compressor control unit 33 controls stopping, starting, and restarting of the compressor 3. If the differential pressure calculated upon elapse of a predetermined period of time after a switching operation of the four-way valve 4 is lower than a first threshold, the compressor control unit 33 stops the compressor 3 and then restarts the compressor 3. Incidentally, in the above case, the compressor control unit 33 may further increase the rotational speed of the compressor 3 instead of restarting the compressor 3. Also, after restarting the compressor 3, the compressor control unit 33 may further increase the rotational speed of the compressor 3 instead of closing off the on-off valves 17 and 21.

The on-off valve control unit 34 controls opening and closing of the on-off valves 17 installed on the hot gas bypass 15 and on-off valve 21 installed on the oil return bypass 19. After the compressor 3 is started, the on-off valve control unit 34 closes off the on-off valves 17 and 21 only for a fixed period of time (e.g., 5 seconds) when the rotational speed of the compressor 3 is being increased. Incidentally, the on-off valve control unit 34 may close off the on-off valves 17 and 21 only for a fixed period of time (e.g., 5 seconds) when the rotational speed of the compressor 3 reaches a predetermined first rotational speed.
The on-off valves 17 and 21 may be closed off only for a fixed period of time when the differential pressure calculated by the differential pressure calculating unit 32 is lower than the predetermined first threshold.

The four-way valve control unit 35 causes the four-way valve 4 to perform a switching operation. That is, the four-way valve control unit 35 causes the four-way valve 4 to switch between on and off. After the on-off valves 17 and 21 are closed off only for a fixed period of time, the four-way valve control unit 35 causes the four-way valve 4 to perform a switching operation.
If the differential pressure becomes equal to or higher than the predetermined first threshold while the on-off valves 17 and 21 remain closed off, the switching operation of the four-way valve 4 may be performed without waiting for elapse of the predetermined period of time.
The four-way valve control unit 35 causes the four-way valve 4 to perform a switching operation again after the compressor 3 restarts.

The determination unit 36 determines whether the switching operation of the four-way valve 4 is successful or unsuccessful. The determination unit 36 determines that the switching operation of the four-way valve 4 has been performed successfully if the differential pressure calculated upon elapse of the predetermined period of time after the four-way valve 4 performs the switching operation is equal to or higher than the first threshold.

Next, the switching operation of the four-way valve 4 in the air-conditioning system will be described.
First, operation of the air-conditioning system before the switching of the four-way valve 4 will be described with reference to Fig. 3.
First, the compressor 3 is started (step S1). Immediately after the start, the four-way valve 4 is not switched because the differential pressure needed to switch the four-way valve 4 is not secured. Instead, the rotational speed of the compressor 3 is increased (step S2).

While the rotational speed is being increased, the respective on-off valves 17 and 21 of the bypass routes such as the hot gas bypass 15 and oil return bypass 19 are closed off (step S3). Consequently, the differential pressure of the refrigerant circuit is adjusted, increasing the possibility that the differential pressure needed to switch the four-way valve 4 will be secured.

Next, 5 seconds after the on-off valves 17 and 21 are closed off, the four-way valve control unit 35 sends a four-way valve switch command to the four-way valve 4 (step S4). Then, based on the switch command, the four-way valve 4 performs a switching operation. By performing the switching operation with the on-off valves 17 and 21 closed off, it is possible to ensure switching of the four-way valve 4.

Subsequently, the respective on-off valves 17 and 21 of the hot gas bypass 15 and oil return bypass 19 are returned to normal control (step S5). Since the on-off valves 17 and 21 are closed off only for a fixed period of time (5 seconds in this case), it is possible to reduce adverse effects the refrigerant circuit could have if the respective on-off valves 17 and 21 were closed off for a long period of time.

Incidentally, although in step S3 of Fig. 3, the on-off valves 17 and 21 are closed off while the rotational speed of the compressor 3 is being increased, a selection may be made, as shown in Fig. 4, between performing a switching operation of the four-way valve 4 (step S12) and closing off the on-off valves 17 and 21 (step S13), by checking whether the differential pressure is equal to or higher than the predetermined first threshold (step S11). The first threshold is, for example, a minimum operating pressure difference needed to switch the four-way valve 4. If the differential pressure becomes equal to or higher than the first threshold while the rotational speed of the compressor 3 is being increased, a switching operation of the four-way valve 4 is performed (step S12). On the other hand, if the differential pressure is lower than the first threshold, the on-off valves 17 and 21 are closed off (step S13).

Also, although in step S4 of Fig. 3, a four-way valve switch command is sent 5 seconds after the on-off valves 17 and 21 are closed off, a selection may be made, as shown in Fig. 4, between performing a switching operation of the four-way valve 4 (step S15) and determining that switching of the four-way valve has failed (step S17), by checking whether the differential pressure is equal to or higher than the predetermined first threshold (step S14).

If the differential pressure becomes equal to or higher than the first threshold, a switching operation of the four-way valve 4 is performed (step S15) even if 5 seconds have not elapsed yet after the on-off valves 17 and 21 are closed off. Subsequently, the respective on-off valves 17 and 21 of the hot gas bypass 15 and oil return bypass 19 are returned to normal control (step S16).

On the other hand, if the differential pressure is lower than the first threshold, for example, upon elapse of 5 seconds after the on-off valves 17 and 21 are closed off, it is determined that switching of the four-way valve has failed (step S17). That is, the differential pressure of the refrigerant circuit should be adjusted and the differential pressure needed to switch the four-way valve 4 should be secured when the on-off valves 17 and 21 are closed off, but if the differential pressure does not change even though the on-off valves 17 and 21 are closed off, it is determined that there is trouble with switching of the four-way valve 4 and that the four-way valve 4 has not been switched.

Next, operation of the air-conditioning system after the above-described switching operation of the four-way valve will be described.
In Figs. 3 and 4, if a switching operation of the four-way valve is performed, it is determined whether or not the four-way valve 4 has been switched successfully. If there is a possibility that switching has been unsuccessful, a switching operation of the four-way valve 4 is performed again.

That is, as shown in Fig. 5, the determination as to whether or not the four-way valve 4 has been switched successfully is made by checking whether or not the differential pressure is equal to or higher than the first threshold, for example, upon elapse of 3 minutes after the switching operation of the four-way valve 4 (step S21). If the differential pressure is equal to or higher than the first threshold, it is determined that the four-way valve 4 has been switched successfully (step S22). On the other hand, if the differential pressure is lower than the first threshold, a switching operation of the four-way valve 4 is performed again in steps S23 to S30.

First, the compressor 3 is stopped and restarted (step S23). Consequently, a state of the refrigerant circuit changes, creating the possibility that the four-way valve 4 will be switched successfully. Then, the rotational speed of the compressor 3 is increased (step S24). In so doing, by checking whether the differential pressure is equal to or higher than the predetermined first threshold (step S25), a switching operation of the four-way valve 4 is performed (step S26) or the on-off valves 17 and 21 are closed off (step S27). If the on-off valves 17 and 21 are closed off, the four-way valve control unit 35 sends a four-way valve switch command to the four-way valve 4 (step S4) after 5 seconds (step S28). Then, based on the switch command, the four-way valve 4 performs a switching operation. Subsequently, the respective on-off valves 17 and 21 of the hot gas bypass 15 and oil return bypass 19 are returned to normal control (step S29).

Then, it is checked again whether or not the differential pressure is equal to or higher than the first threshold (step S30), for example, upon elapse of 3 minutes after the switching operation of the four-way valve 4 in step S26 or S28. If the differential pressure is equal to or higher than the first threshold, it is determined that the four-way valve 4 has been switched successfully (step S22). On the other hand, if the differential pressure is lower than the first threshold, it is determined that switching of the four-way valve has failed (step S17).

Incidentally, although in step S25 of Fig. 5 after the compressor 3 is restarted, it is determined whether or not the differential pressure is equal to or higher than the first threshold, the determination as to switching of the four-way valve 4 may be made by watching the rotational speed of the compressor 3 as shown in Fig. 6. Specifically, the rotational speed and differential pressure of the compressor 3 are checked in steps S32 and S33, and if the differential pressure is lower than the first threshold and the rotational speed is equal to or higher than a predetermined second rotational speed, it is determined that switching of the four-way valve has failed (step S17). That is, if a differential pressure equal to or higher than the first threshold is not secured even though the rotational speed of the compressor 3 is increased to a fixed value, it is determined that there is trouble with switching of the four-way valve 4 and that the four-way valve 4 has not been switched.

When the rotational speed and differential pressure of the compressor 3 are checked in steps S32 and S33, if the rotational speed is lower than the predetermined first rotational speed and the differential pressure is equal to or higher than the first threshold, a switching operation of the four-way valve 4 is performed (step S34). It is checked whether or not the differential pressure is equal to or higher than the first threshold (step S35), for example, upon elapse of 3 minutes after the switching operation of the four-way valve 4. If the differential pressure is equal to or higher than the first threshold, it is determined that the four-way valve 4 has been switched successfully (step S22). On the other hand, if the differential pressure is lower than the first threshold, it is determined that switching of the four-way valve has failed (step S17).

Thus, if a switching operation of the four-way valve 4 is not performed successfully, trouble such as liquid floodback might occur, but according to the present embodiment, an attempt is made to switch the four-way valve 4 by increasing the possibility of producing a differential pressure by closing off the on-off valves 17 and 21 of bypass routes such as the hot gas bypass 15 and oil return bypass 19. In some cases, by checking the differential pressure, a switch command is sent to the four-way valve 4, causing the four-way valve 4 to perform a switching operation. That is, switching of the four-way valve 4 is ensured by checking that the possibility is high that the differential pressure needed to switch the four-way valve 4 is secured. On the other hand, when the differential pressure is not secured, an attempt can be made to switch the four-way valve 4 again after restarting the compressor 3, to ensure switching of the four-way valve 4.

## Claims

1. An air-conditioning system **characterized by** comprising:
a refrigerant circuit which includes a compressor (3) adapted to compress and discharge a refrigerant and a four-way valve (4) driven by pilot pressure and adapted to switch a flow path for the refrigerant discharged from the compressor (3);
a compressor control unit (33) adapted to adjust rotational speed of the compressor (3);
an on-off valve control unit (35) adapted to close off an on-off valve (17) installed on a bypass route (15) in the refrigerant circuit only for a fixed period of time when the rotational speed of the compressor (3) reaches a predetermined first rotational speed or when the rotational speed of the compressor (3) is being increased; and
a four-way valve control unit (35) adapted to cause the four-way valve (4) to perform a switching operation after the on-off valve (17) is closed off for the fixed period of time.

2. The air-conditioning system according to claim 1, further comprising:
a high pressure measuring unit (25) adapted to measure a first pressure of the refrigerant on a discharge side of the compressor (3), which coincides with an inlet side of the four-way valve (4);
a low pressure measuring unit (24) adapted to measure a second pressure of the refrigerant on a suction side of the compressor (3), which coincides with an outlet side of the four-way valve (4); and
a differential pressure calculating unit (32) adapted to calculate a differential pressure between the first pressure and the second pressure, wherein
the on-off valve control unit (34) closes off the on-off valve (17) only for a fixed period of time when the calculated differential pressure is lower than a predetermined first threshold.

3. The air-conditioning system according to claim 2, wherein the four-way valve control unit (34) causes the four-way valve (17) to perform a switching operation if the differential pressure becomes equal to or higher than the first threshold while the on-off valve (17) remains closed off.

4. The air-conditioning system according to claim 2 or 3, further comprising a determination unit (36) adapted to determine that a switching operation of the four-way valve (4) has been performed successfully if the differential pressure calculated upon elapse of a predetermined period of time after the four-way valve (4) performs the switching operation is equal to or higher than the first threshold.

5. The air-conditioning system according to claim 2 or 3, wherein:
if the differential pressure calculated upon elapse of a predetermined period of time after the four-way valve (4) performs a switching operation is lower than the first threshold, the compressor control unit (33) stops the compressor (3) and then restarts the compressor (3); and
the four-way valve control unit (35) causes the four-way valve (4) to perform a switching operation again after the restart.

6. A four-way valve control method for an air-conditioning system equipped with a refrigerant circuit which includes a compressor (3) adapted to compress and discharge a refrigerant and a four-way valve (4) driven by pilot pressure and adapted to switch a flow path for the refrigerant discharged from the compressor (3), the four-way valve control method being **characterized by** comprising the steps of:
adjusting (S2) rotational speed of the compressor (3);
closing (S3) off an on-off valve (17) installed on a bypass route (15) in the refrigerant circuit only for a fixed period of time when the rotational speed of the compressor (3) reaches a predetermined first rotational speed or when the rotational speed of the compressor (3) is being increased; and
causing (S4) the four-way valve (4) to perform a switching operation after the on-off valve (17) is closed off for the fixed period of time.
